# EUROPÄISCHE PATENTSCHRIFT

(11) **EP 3 356 696 B1**
(45) Veröffentlichungstag und Bekanntmachung des Hinweises auf die Patenterteilung: **07.04.2021**
(21) Anmeldenummer: 16779026.0
(22) Anmeldetag: 28.09.2016
(51) Int. Cl.: F16G 15/06

(54) **SCHNELL LÖSBARE RASTANORDNUNG FÜR EIN BAUTEIL DER HEBE-, ZURR- ODER ANSCHLAGTECHNIK**
RAPIDLY RELEASABLE LATCHING ARRANGEMENT FOR A COMPONENT FROM LIFTING, LASHING OR FASTENING TECHNOLOGY
ENSEMBLE D'ENCLIQUETAGE LIBÉRABLE RAPIDEMENT POUR UN ÉLÉMENT STRUCTURAL DANS LE DOMAINE DU LEVAGE, DE L'ARRIMAGE OU DE L'ACCROCHAGE

(30) Priorität: 29.09.2015 DE 102015218799
(43) Veröffentlichungstag der Anmeldung: 08.08.2018
(73) Patentinhaber: RUD Ketten Rieger & Dietz GmbH u. Co. KG, 73432 Aalen (DE)
(72) Erfinder: BETZLER, Michael, 73453 Abtsgmünd (DE)
(74) Vertreter: Grünecker Patent- und Rechtsanwälte PartG mbB
(86) Internationale Anmeldenummer: PCT/EP2016/073031
(87) Internationale Veröffentlichungsnummer: WO 2017/055308

(56) Entgegenhaltungen:
- WO-A1-89/00249
- FR-A1- 2 382 624
- JP-A- 2003 254 393
- US-A- 4 102 124

## Beschreibung

Die Erfindung betrifft eine Rastanordnung für ein Bauteil der Hebe-, Zurr- oder Anschlagtechnik, wie beispielsweise ein Kettenschloss, einen Schäkel, eine Spannvorrichtung für Ketten, Seile oder Gurte, eine Klaue zum Verkürzen von Ketten, in Ketten, Seile und/oder Gurte einhängbare Bauteile sowie Mitnehmer oder Karabiner.

In der DE 33 04 603 C2 ist ein Bauteil, insbesondere ein Schäkel, gezeigt, in das ein Bolzen eingeschraubt wird. Der Bolzen ist durch eine Spannhülse gesichert. Der Bolzen ist nicht drehbar, so dass Gefahr besteht, dass er sich im Betrieb einseitig abnutzt.

Die Gefahr einer einseitigen Abnutzung besteht bei dem Bauteil der DE 22 34 536 C3 nicht, da der Bolzen durch eine Spannhülse in einer umlaufenden Nut gesichert und daher drehbar ist. Allerdings ist der Bolzen ungesichert, sobald die Spannhülse verschlissen ist, was durchaus vorkommen kann.

Auch eine Kombination der Bauteile der DE 33 04 603 C2 und der DE 22 34 536 C2 ist bekannt, bei der die Gewinde ein Durchschrauben des Bolzens erlauben, bis die Gewinde außer Eingriff gelangen. Sind die Gewinde außer Eingriff, wird der Bolzen durch eine Spannhülse in einer umlaufenden Nut gesichert. Bei dieser Lösung ist der Bolzen drehbar und bleibt auch bei einer verschlissenen Spannhülse durch die Gewinde gesichert.

Ein Bauteil für Rundgliederketten ist in der DE-OS 2 221 633 beschrieben. In dem Bauteil sind zwei Bolzen befestigt, die durch Sicherungselemente in Form ebenfalls von Spannhülsen gehalten werden. Auch die Verkürzungsklauen für Kettenstränge, wie sie in der DE 10 2008 028 111 A1, oder DE 10 2005 035 375 A1 oder der DE 10 2005 019 651 A1 dargestellt sind, weisen durch Spannstifte gesicherte Bolzen auf. Auch die Bolzen in Spannvorrichtungen sind durch Spannhüslen gesichert, wie die DE 71 15 968 U1 zeigt.

Ein Bauteil in Form eines Endbeschlags für Lasthebe- oder Vezurrbänder ist aus der DE 28 04 735 C3 bekannt, bei dem bolzenförmige Querbalken in Flansche eines ösenförmigen Oberteils eingesetzt werden. An den Querbalken werden die Schlaufen von Bändern eingehängt. Eine Sicherung der Querbalken erfolgt über Stützgabeln und Sicherungshülsen.

In der US 4,102,124 A ist ein Schäkel beschrieben, dessen Bolzen frei drehbar in axialer Richtung festgelegt werden kann. Dazu ist an einem Ende des Bolzens eine radiale Bohrung vorgesehen, in welcher ein federdruckbeaufschlagter Stift angeordnet ist. Dieser Stift wird zur axialen Festlegung des Bolzens in einer umlaufenden Nut in der Öffnung eines Schäkelarmes angeordnet. Um die Verrastung des Stiftes vom Bolzen in der Nut des Schäkelarmes zu lösen, ist ein Schlitz im Schäkel vorgesehen, der in der umlaufenden Nut mündet und durch welchen eine Münze bzw. ein Hebel in die Nut eingeführt werden kann. Bei Einführung der Scheibe in die Nut wird die Spitze des Stiftes in die Bohrung des Bolzens zurückgedrängt und die Verrastung zwischen Stiftspitze und umlaufender Nut gelöst.

In der WO 89/00249 A1 ist eine verriegelbare Kupplung eines Stiftes mit einem Gabelkopf beschrieben, der eine Durchgangsbohrung sowie einer in der Durchgangsbohrung verschiebbaren Stift aufweist. Die Kupplung umfasst eine Bremse, welche die Bewegung des Stiftes innerhalb der Bohrung sperrt, wozu Anschläge an gegenüberliegenden Enden des Stiftes angeordnet sind, die verhindern, dass der Stift aus der Bohrung entfernt werden kann.

In der FR 2 382 624 A1 ist ein Schäkel mit U-förmigen Körper beschrieben, welcher durch einen Bolzen geschlossen werden kann. Dazu wird der Bolzen axial durch einen Stößelkopf gehalten, der gleitend in einer Bohrung eines der Schäkelschenkel eingesetzt ist. Die Bohrung ist senkrecht zur Achse des Loches für den Durchgang des Bolzens angeordnet und schneidet sich mit dem Loch. Der Stößelkopf ist federgelagert und greift in eine Ringnut ein, die am Bolzen nahe eines seiner Enden vorgesehen ist.

Die JP 2003 254393 A zeigt einen Mechanismus zur Verriegelung eines Bolzens von einem Schäkel, durch welchen der Bolzen axial und frei drehbar festgelegt werden kann. Dazu ist der Bolzen mit zwei umlaufenden Nuten versehen, in welche federbeaufschlagte Stifte, die in den Schenkeln des Schäkelbügels eingelassen sind, eingreifen können.

Bei allen diesen Bauteilen ist die aufwändige Montage der Bolzen nachteilig.

Der Erfindung liegt daher die Aufgabe zugrunde, eine Sicherung zu schaffen, mit denen sich beispielsweise die Bolzen der Bauteile der Anschlag-, Zurr- und Hebemitteln einfach befestigen und lösen lassen, ohne dass ein zusätzliches Sicherungselement in Form beispielsweise eines Spannstiftes notwendig ist. Wichtig ist in diesem Zusammenhang, dass sich der Bolzen noch frei drehen kann, so dass seine gesamte Oberfläche gleichmäßig verschleißt.

Die erfindungsgemäße Lösung sieht eine Rastanordnung für ein Bauteil der Hebe-, Zurr- oder Anschlagtechnik mit einer ersten Komponente, die an ihrem einen Ende mit wenigstens einem seitlich vorragenden, federgespannten Rastvorsprung versehen ist, und mit einer zweiten Komponente vor, die mit einer Aufnahme versehen ist, in der das Ende der ersten Komponente in einer Einführrichtung aufnehmbar und drehbar befestigbar ist, und die eine Rastmulde für den Rastvorsprung aufweist, wobei die Rastmulde an wenigstens einer Seite von einer in die Rastmulde verschieblichen Auslöseschulter begrenzt ist, die mit einem von außerhalb der Rastanordnung zugänglich angeordneten, beweglichen Handschalter versehen ist, der mit der Auslöseschulter bewegungsübertragend verbunden ist und die Aufnahme verschließt.

Die erfindungsgemäße Lösung hat den Vorteil, dass die erste und die zweite Komponente aufgrund der Rastung schnell und sicher miteinander verbunden werden können und die zeitaufwendige Sicherung durch eine Spannhülse entfällt. Die Halterung der ersten Komponente, die insbesondere als Bolzen ausgestaltet sein kann, in der Aufnahme der zweiten Komponente, beispielsweise einem Bügel, erfolgt durch den federgespannten Rastvorsprung, der in die Rastmulde einrastet. Ein zusätzliches Sicherungselement ist nicht notwendig. Durch Betätigen des Handschalters kann ferner die verschiebliche Auslöseschulter in die Rastmulde verschoben werden, so dass sich die Rastverbindung leicht lösen lässt. Durch die Ausgestaltung des Handschalters als Verschluss für die Aufnahme ist die Rastanordnung vor Verschmutzung gesichert. Außerdem ist der Handschalter auf diese Weise platzsparend und sicher angeordnet.

Die Erfindung kann durch eine Reihe von jeweils für sich vorteilhaften, beliebig miteinander kombinierbaren und voneinander unabhängigen Weiterbildungen, die im Folgenden beschrieben sind, noch einmal verbessert sein.

So kann gemäß einer ersten vorteilhaften Ausgestaltung eine Höhe der Auslöseschulter einer Höhe einer der verschieblichen Schulter vorzugsweise entgegen der Einführrichtung gegenüberliegenden Schulter oder einer in Einführrichtung an die Auslöseschulter angrenzenden Schulter entsprechen. Ist bei dieser Ausgestaltung die Auslöseschulter in die Rastmulde geschoben, wird der Rastvorsprung durch die Auslöseschulter auf Höhe der anderen Schulter gehoben. Der Rastvorsprung kann von der Auslöseschulter auf die andere Schulter verschoben werden, um die Verrastung vollständig zu lösen. Die erste Komponente kann so schnell und einfach von der zweiten Komponente getrennt werden.

Die Auslöseschulter kann mit einer im verrasteten Zustand zum Rastvorsprung weisenden Auflaufschräge und/oder der Rastvorsprung kann mit einer im verrasteten Zustand zur Auslöseschulter weisenden Auflaufschräge versehen sein. Durch die Auflaufschräge lässt sich der Rastvorsprung leichter auf die Auslöseschulter bewegen, wenn die Auflöseschulter in die Rastmulde bewegt wird. Diese Ausgestaltung erleichtert also das Aufheben der Rastverbindung zwischen erster und zweiter Komponente.

Die Rastvorsprünge können radial von einer Umfangsfläche des Bolzens vorspringen und in radialer Richtung gegen die Wirkung einer Feder eindrückbar gehalten sein.

Damit die erste Komponente ohne größeren Kraftaufwand in einer Einführrichtung in die zweite Komponente eingesetzt werden kann, liegt der Rastvorsprung zumindest in Einführrichtung im Schatten der zweiten Komponente, steht also nicht über.

Es ist ferner von Vorteil, wenn die Auslöseschulter so geneigt ist, dass durch die Federspannung des Rastorgans die Auslöseschulter beim Einrasten selbsttätig aus der Rastmulde gedrückt wird, ohne dass eine Selbsthemmung durch Reibung stattfindet. Gleichzeitig sollte die Auflaufschräge so geneigt sein, dass beim Betätigen des Handschalters die Auslöseschulter den Rastvorsprung ohne Selbsthemmung aus der Verrastung bewegt.

Um eine leichtgängige relative Beweglichkeit zwischen Rastvorsprung und Auslöseschulter zu erhalten, ohne dass eine Selbsthemmung aufgrund von Haftreibung eintritt, sollte ein Winkel der Auflaufschräge relativ zu der Richtung, in der die Auslöseschulter verschieblich ist, außerhalb des Reibungskegels auf die der Auslöseschulter zugeordnete Gegenfläche des beispielsweise Rastvorsprungs liegen. Der Reibungskegel kann für die jeweilige Oberflächenpaarung durch Versuche oder über Tabellen bestimmt werden. Ein Winkel innerhalb des Reibungskegels würde zu einer Selbsthemmung aufgrund Haftreibung führen, wenn Rastvorsprung und Auslöseschulter gegeneinander drücken.

Die Auslöseschulter kann mittels einer Zusatzfeder federbelastet sein. Auf diese Weise nimmt die Auslöseschulter stets eine vorbestimmte Ausgangsstellung ein. Die Ausgangsstellung, in die die Auslöseschulter durch die Zusatzfeder gedrückt ist, entspricht bevorzugt der Stellung, in der sich die Auslöseschulter bei eingesetztem Rastvorsprung befindet. Der Flanschschalter befindet sich somit stets in der Stellung, von der aus die Verrastung gelöst werden kann.

Damit die erste Komponente in der zweiten Komponente drehbar gesichert ist, kann in einer ersten Variante die Rastmulde zusammen mit dem Rastvorsprung drehbar an der ersten Komponente befestigt sein. Vom Aufwand her einfacher ist es jedoch, die Rastmulde gemäß einer weiteren Variante ringförmig, insbesondere ringförmig geschlossen, auszugestalten. In der ringförmigen Rastmulde kann der wenigstens eine Rastvorsprung drehbar aufgenommen werden, während er gleichzeitig in axialer Richtung gesichert ist. Eine vollständige Drehbarkeit um 360° lässt sich erreichen, wenn die Rastmulde ringförmig durchgängig ist. Damit kann sich der wenigstens eine Rastvorsprung in der Rastmulde in deren Umfangsrichtung bzw. die erste Komponente um ihre Achse frei drehen.

Die Auslöseschulter kann die Rastmulde insbesondere an einer der Seiten der Rastmulde begrenzen, die sich in Einführrichtung gegenüberliegen. Um eine Auslösung unabhängig von der Drehstellung des wenigstens einen Rastvorsprungs zu ermöglichen, ist es von Vorteil, die Auslöseschulter ringförmig, insbesondere ringförmig geschlossen, beispielsweise als Teil einer verschieblichen Hülse, auszugestalten. Bei dieser Ausgestaltung kann die Auslöseschulter über den gesamten Ringumfang in einer Bewegung in die Rastmulde bewegt werden und dort den Rastvorsprung aus der Rastmulde heben. Vorzugsweise liegt die Auslöseschulter in Einführrichtung hinter der anderen die Rastmulde begrenzenden Schulter.

Der Handschalter kann in einer Variante teller- oder kappenförmig ausgestaltet. Die Auslöseschulter kann von einem Kragen der Kappe ausgebildet sein. Der Kragen kann entgegen der Einführrichtung vom Handschalter in die Aufnahme vorspringen.

Der Handschalter bzw. die Kappe können in der Aufnahme insbesondere parallel zur Einführrichtung verschieblich gehalten sein. Der Handschalter kann von einer Grundfläche der Kappe gebildet sein. Diese Grundfläche kann insbesondere eben sein.

Diese Ausgestaltungen führen zu einer besonders schnell lösbaren Rastanordnung: Zum Aufheben der Verrastung muss lediglich die Grundfläche der Kappe so bewegt werden, dass die mit dem Handschalter bewegungsübertragend verbundene Auslöseschulter in die Rastmulde einfährt. Gemäß einer Variante muss hierzu lediglich der Handschalter auf die erste Komponente, den Bolzen, zu bewegt, beispielsweise gegen die Wirkung der auf die Rastvorsprünge drückenden Feder, werden. Dies kann durch manuellen Druck auf die Grundfläche des Handschalters erfolgen.

Zum Schutz vor unbeabsichtigter Betätigung kann der Handschalter und/oder die Kappe von einem Kragen, der insbesondere bewegungsstarr mit der zweiten Komponente verbunden und/oder monolithisch von der zweiten Komponente gebildet ist, umgeben sein. Der Kragen kann von einem hülsenförmigen, separaten Anschlussteil gebildet sein, das einen Teil der Aufnahme ausbildet. In dem Anschlussteil kann der Handschalter zumindest in Einführrichtung durch ein als Anschlag dienendes Haltemittel verschieblich gehalten sein. Ein solches Haltemittel kann beispielsweise ein Sprengring oder ein Absatz sein.

In den Handschalter kann im verrasteten Zustand von erster und zweiter Komponente ein freies Ende der ersten Komponente ragen.

Es ist gemäß einer weiteren Ausgestaltung möglich, das Lösen der Rastverbindung mit einem gleichzeitigen Ausschieben der ersten Komponente aus der Aufnahme zu kombinieren. Dadurch kann in einer einzigen Bewegung die Verbindung zwischen erster und zweiter Komponente gelöst und die erste Komponente ausgeworfen werden. Auf einfache Weise lässt sich dies erreichen, wenn mit der Auslöseschulter eine das Ende der ersten Komponente in Einführrichtung überlappende, entgegen der Einführrichtung verschiebliche und entgegen die Einführrichtung weisende Ausschiebefläche verbunden ist. Der Abstand der Ausschiebefläche von der ersten Komponente ist bevorzugt kleiner als die Länge des Auslöseweges der Auslöseschulter. Der Auslöseweg ist derjenige Weg, den die Auslöseschulter zum Lösen der Rastverbindung überstreicht. Er erstreckt sich von einer Raststellung, in der sich Auslöseschulter bei vollständig in der Rastmulde verrastetem Rastvorsprung befindet, zu einer Endstellung der Auslöseschulter in der Rastmulde. Da der Abstand kleiner als der Auslöseweg ist, drückt bei dieser Ausgestaltung die Ausschiebefläche gegen das freie Ende der ersten Komponente, bevor die Auslöseschulter ihre Endstellung erreicht hat. Im letzten Abschnitt des Auslöseweges schiebt also die Ausschiebefläche die erste Komponente entgegen der Einführrichtung aus der Aufnahme.

Vorteilhaft befindet sich eine Auslösestellung zwischen der Raststellung und der Endstellung der Aufnahmeschulter. In der Auslösestellung liegt der Rastvorsprung bereits auf der Auslöseschulter auf und befindet sich auf Höhe der der Auslöseschulter gegenüberliegenden Schulter. Dies erleichtert den Auswurf der ersten Komponente, weil der Rastvorsprung bei der weiteren Bewegung des Handschalters in die Auslösestellung von der Auslöseschulter auf die gegenüberliegende Schulter gleiten kann.

Die verschiebliche Auslöseschulter und der Rastvorsprung bilden zusammen ein Formgehemme, da durch die auf die Aufnahmeschulter von dem Handschalter wirkende Kraft die Verrastung überwinden kann. Die mit der Auslöseschulter zusammenwirkende Schulter der Rastmulde bildet dagegen mit dem Rastvorsprung einen Formschluss, der durch entgegen der Einführrichtung wirkende Kräfte nicht zerstörungsfrei aufgehoben werden kann.

Das freie Ende der ersten Komponente kann einen geringeren Durchmesser aufweisen als der sich daran anschließende Abschnitt der ersten Komponente. Insbesondere kann der sich an das freie Ende anschließende Abschnitt einen Durchmesser aufweisen, der wenigstens so groß ist wie der Durchmesser an der Stelle des wenigstens einen Rastvorsprunges. Diese Ausgestaltung stellt sicher, dass die erste Komponente durch die Durchlässe der zweiten Komponente hindurchgeschoben werden kann, ohne dass die Rastvorsprünge ausgelenkt werden.

Eine der beiden Komponenten kann ferner mit einem oder zwei umlaufenden Vorsprüngen und/oder Vertiefungen versehen sein, die zusammen mit Federelementen der anderen Komponente ein Formgehemme bilden, welches die Lage der ersten Komponente relativ zur zweiten Komponente an vorgegebenen Positionen zumindest vorübergehend sichert. Beispielsweise kann die erste Komponente mit wenigstens einem Vorsprung und/oder wenigstens einer Vertiefung versehen sein, die mit wenigstens einer Feder der zweiten Komponente zusammenwirkt.

Die Rastanordnung kann insbesondere Teil eines Bauteils zum Heben, Anschlagen und/oder Festzurren von Lasten sein. Die erste Komponente kann ein Bolzen und die zweite Komponente ein bügel- oder ösenförmiges Teil sein, das zwei Schenkel aufweist, die vom Bolzen durchdrungen werden. Die Rastmulde kann an einem der Schenkel, insbesondere dem in Einführrichtung des Bolzens hinteren Schenkel angeordnet sein. Eine Feder, die mit umlaufenden Vertiefungen oder Vorsprüngen des Bolzens zusammenwirkt, kann am anderen Schenkel angeordnet sein. Eine der Vertiefungen und/oder Vorsprünge des Bolzens befindet sich bevorzugt nahe an einem Bolzenkopf, eine andere Vertiefung und/oder ein anderer Vorsprung näher am freien Ende des Bolzens. Auf diese Weise lässt sich der Bolzen in zwei unterschiedlich weit eingeschobenen Stellungen vorläufig fixieren, bevor er verrastet wird.

Das Federelement zur Sicherung der ersten Komponente außerhalb der Raststellung kann eine polygonal um die erste Komponente sich erstreckende Blattfeder sein.

Das Bauteil kann ferner mit einer Indikatoreinrichtung versehen sein, die anzeigt, ob die Verrastung von erster und zweiter Komponente vollständig ist und folglich anzeigt, dass das Bauteil sicher benutzt werden kann. Hierzu kann die Indikatoreinrichtung mit wenigstens einer Markierung versehen sein, die von außerhalb des Bauteils entweder nur sichtbar ist, wenn die erste und zweite Komponente verrastet sind, oder nur sichtbar ist, wenn die erste und zweite Komponente nicht verrastet sind. In einer Variante können auch zwei Markierungen vorhanden sein, von denen nur die eine sichtbar ist, wenn die erste und zweite Komponente verrastet sind, und nur die andere sichtbar ist, wenn die erste und zweite Komponente nicht verrastet sind.

Im Folgenden ist die Erfindung mit zumindest einem Teil der weiterbildenden Merkmale, wie sie oben beschrieben sind, und mit Bezug auf die beigefügten Zeichnungen beispielhaft näher erläutert. Nach Maßgabe der obigen Ausführungen können einzelne Merkmale des beschriebenen Ausführungsbeispiels weggelassen werden, wenn es auf den mit diesen Merkmalen verbundenen Vorteil jeweils bei einer bestimmten Anwendung nicht ankommen sollte. Umgekehrt kann das Ausführungsbeispiel oben beschriebene Merkmale zusätzlich aufweisen, wenn der jeweilige Anwendungsfall diese Merkmale erfordert.

Zum einfacheren Verständnis sind in den Zeichnungen für Elemente, die sich hinsichtlich Funktion und/oder Aufbau entsprechen, jeweils dieselben Bezugszeichen verwendet.

Es zeigen:
- Fig. 1: eine schematische Perspektivansicht der erfindungsgemäßen Rastanordnung in einer ersten Stellung;
- Fig. 2: die Rastanordnung der Fig. 1 in einer zweiten, verrasteten Stellung.
- Fig. 3: eine schematische Darstellung einer Variante einer Rastanordnung 1.

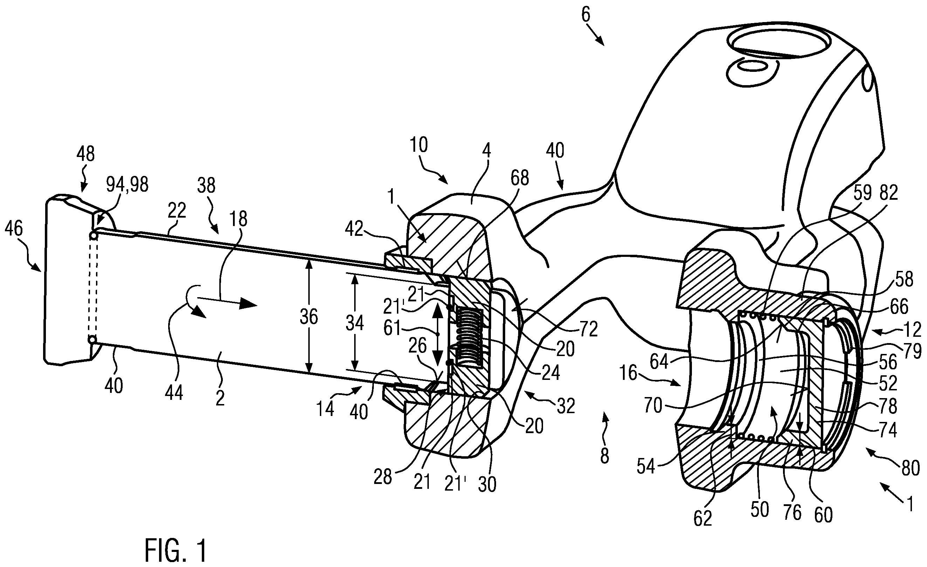

Im Folgenden ist zunächst der Aufbau der Rastanordnung 1 mit Bezug auf die Fig. 1 beispielhaft erläutert.

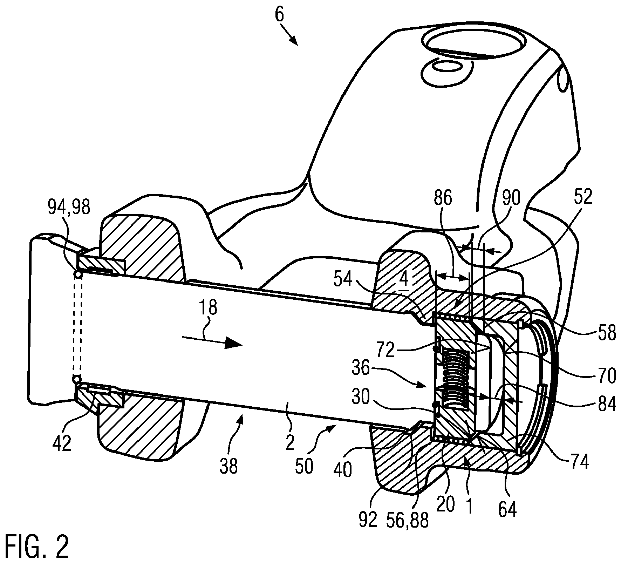

Durch die Rastanordnung 1 wird eine erste, in Fig. 1 und 2 geschnitten dargestellte Komponente 2 in einer zweiten Komponente 4 wiederholt lösbar und drehbar gehalten.

Wie dargestellt kann es sich bei der ersten Komponente 2 um den Bolzen eines Bauteils 6 der Anschlag-, Zurr- oder Hebetechnik handeln. Der Bolzen kann einen Durchmesser von wenigstens 20 mm bis über 50 mm aufweisen. Beispiele für derartige Bauteile sind Schäkel, Haken, Klauen, Kettenschlösser, Spannvorrichtungen, in Ketten, Gurte oder Seile einhängbare Mitnehmer und dergleichen. Die zweite Komponente 4 bildet einen Grundkörper des Bauteils 6, der mit einer von der ersten Komponente 2 zu verschließenden Öffnung 8 versehen ist. Die zweite Komponente 4 kann insbesondere bügelförmig mit zwei Schenkeln 10,12 ausgestaltet sein. Die Schenkel 10, 12 sind mit Durchlässen 14, 16 versehen, die miteinander fluchten und durch die die erste Komponente 2 in einer Einführrichtung 18 eingeschoben werden kann, um die Öffnung 8 bzw. zweite Komponente 4 zu verschließen.

Die Rastanordnung 1 verteilt sich auf die erste Komponente 2 und die zweite Komponente 4, bei letzterer insbesondere auf einen der Durchlässe 14, 16 der zweiten Komponente 4, hier dem in Einführrichtung 18 hinteren Durchlass 16.

Fig. 1 zeigt die Öffnung 8 im offenen Zustand, in dem sie noch nicht von der ersten Komponente 2 verschlossen ist. Die Rastanordnung 1 befindet sich noch nicht in der Raststellung. In die Öffnung 8 können Gurte, Ketten oder andere Bauteile 6 eingelegt werden.

Die Rastanordnung 1 weist wenigstens einen Rastvorsprung 20 auf, der federbelastet an der ersten Komponente 2 befestigt ist. Wie Fig. 1 zeigt, können insbesondere zwei oder mehr Rastvorsprünge 20 um einen Umfang 22 der ersten Komponente 2 vorzugsweise äquigonal verteilt sein. Die Federbelastung wird durch eine Feder 24 erzeugt, die bei mehreren Rastvorsprüngen 20 zwischen den Restvorsprüngen angeordnet sein kann und sich gleichzeitig an sämtlichen Rastvorsprüngen 20 abstützen kann. Sind mehr als zwei Rastvorsprünge 20 vorgesehen, so kann anstelle der in Fig. 1 dargestellten gewendelten Feder eine beispielsweise ringförmige Blattfeder verwendet sein, die mehr oder weniger koaxial zur ersten Komponente 2 angeordnet ist. Der Rastvorsprung 20 kann ein zylinderförmiger Körper mit kreisförmigem oder polygonalem Querschnitt sein. In der ersten Komponente 2 kann er reib- und/oder formschlüssig gegen Herausfallen gesichert sein. In Fig. 1 ist beispielhaft dargestellt, dass die Rastvorsprünge 20 mit einer sich radial erstreckenden Ausnehmung 21 versehen sind, in denen ein von der ersten Komponente 2 gehaltenes Sicherungselement 21' aufgenommen ist. Die Ausnehmungen 21 sind lang genug, um die radiale Verschieblichkeit der Rastvorsprünge 20 zu gewährleisten.

Wirkt auf den wenigstens einen Rastvorsprung 20 keine Kraft von außerhalb der ersten Komponente 2, so ragt dieser über eine Zapfenfläche 26 hinaus. In dem über die Zapfenfläche 26 hinausragenden Bereich 28 ist der Rastvorsprung 20 an seiner in Einführrichtung 18 weisenden Seite mit einer Auflaufschräge 30 versehen.

Die Zapfenfläche 26 kann sich an dem in Einführrichtung 18 gelegenen Ende 32 der ersten Komponente befinden und einen kreisförmigen oder polygonalen Querschnitt aufweisen. Ein Durchmesser 34 der Zapfenfläche 26 kann bei dieser Ausgestaltung kleiner sein als der Durchmesser 36 des in Einführrichtung 18 vor der Zapfenfläche 26 gelegenen Bereichs 38 der ersten Komponente 2.

Die Rastvorsprünge 20 ragen bevorzugt in ihre unbelasteten Ruhestellung nicht über den Innendurchmesser der Durchlässe 14, 16, so dass sie ohne Kraftaufwand durch die Durchlässe 14, 16 gesteckt werden können. Insbesondere können die Durchlässe 14, 16 nicht über den Durchmesser 36 ragen.

Die erste Komponente 2 kann an ihrer Umfangsfläche 22 mit wenigstens einer, vorzugsweise jedoch zwei in Einführrichtung beabstandeten Haltemulden 40 versehen sein, die mit einer Haltefeder 42 in wenigstens einem der Durchlässe 14, 16, vorzugsweise dem in Einführrichtung 18 vorderen Durchlass 14 zusammenwirken. Die Haltemulden 40 können sich in einer um die Einführrichtung 18 erstreckenden Umfangsrichtung 44 durchgängig über die Umfangsfläche 22 erstrecken. Der Abstand zwischen den Haltemulden entspricht bevorzugt in etwa der lichten Weite der Öffnung 8. Die Haltefeder 42 kann als eine polygonale Ringfeder ausgestaltet sein, die in die Haltemulde 40 über den Umfang 22 einschnappt. Die Haltemulden 40 bilden mit der Haltefeder 42 ein Formgehemme, das die erste Komponente 2 in in Einführrichtung beabstandeten Haltemulden 40 in zwei Positionen sichert. Diese beiden Sicherungspositionen können durch Aufbringen von parallel zur Einführrichtung 18 wirkenden Kräften verlassen werden.

Am anderen Ende 46 kann die erste Komponente 2 einen Kopf 48 aufweisen, dessen Durchmesser größer als die lichte Weite des in Einführrichtung 18 vorderen Durchlasses 14 ist.

Die zweite Komponente 4 weist eine Aufnahme 50 für die an der ersten Komponente 2 sich befindlichen Elemente der Rastanordnung 1 auf. Die Aufnahme 50 umfasst eine Rastmulde 52, die ringförmig ausgestaltet sein kann, so dass der wenigstens eine Rastvorsprung 20 um die Einführrichtung 18 drehen kann, wenn er sich in der Rastmulde befindet. Diese Drehbarkeit verhindert einen einseitigen Verschleiß der ersten Komponente 2. Außerdem kann durch eine ringförmige Rastmulde die erste Komponente 2 in jeder Drehstellung verrastet werden. Kommt es darauf nicht an, so kann die Rastmulde 52 selbstverständlich auch nur sektorförmig ausgebildet sein. Dann kann allerdings die erste Komponente 2 nur verrastet werden, wenn der Rastvorsprung mit der Rastmulde fluchtet. Die Aufnahme 50 kann integraler Bestandteil der zweiten Komponente 4 oder ein separater, an der zweiten Komponente 4 befestigtes Element sein.

Die Rastmulde 52 ist an einer, hier auf ihrer in Einführrichtung 18 vorderen Seite, von einer stationären Rastschulter 54 begrenzt. Die Rastschulter 54 kann radial verlaufen, so dass sie einen senkrechten Absatz bildet oder einen Hinterschnitt aufweist.

Durch die Rastschulter 54 wird bei in die Rastmulde 52 eingerastetem Rastvorsprung 20 ein entgegen der Einführrichtung 18 sperrender Formschluss gebildet, insbesondere, wenn der Rastvorsprung 20 an seiner entgegen der Einführrichtung 18 gelegenen Seite im Bereich 28 komplementär zur Rastschulter 54, bzw. dessen die Rastmulde 52 begrenzenden Rastfläche 56 ausgestaltet ist. Durch den Formschluss zwischen Rastschulter 54 und Rastvorsprung 20 lässt sich die erste Komponente 2 entgegen der Einführrichtung 18 zerstörungsfrei nur dann aus der Aufnahme 50 bewegen, wenn die Verrastung gelöst wird.

Zur Freigabe der Verrastung ist die Rastmulde 52 von einer zweiten Schulter, einer verschieblichen Auslöseschulter 58 begrenzt. Die Auslöseschulter ist parallel zur Einführrichtung 18 verschieblich in der Aufnahme 50 gehalten. Über eine Zusatzfeder 59, die sich zwischen der Auslöseschulter 58 und der ersten Komponente 2, insbesondere der Auslöseschulter 58 und der Rastschulter 54, erstreckt, ist die Auslöseschulter 58 vorgespannt. In der Ruhestellung nimmt die Auslöseschulter bevorzugt eine Stellung ein, in der sie von der Rastschulter 54 wegbewegt ist. Zum Lösen der Verrastung muss die Auslöseschulter 58 gegen die Wirkung der Zusatzfeder 59 bewegt werden. Ihre Höhe 60 quer zur Einführrichtung bzw. in radialer Richtung 61 sollte wenigstens in etwa einer Höhe 62 der Rastschulter in dieser Richtung entsprechen. Die Höhe 62 der Rastschulter kann je nach Größe des Bauteils 6 etwa 1 cm bis etwa 2 cm betragen.

Die Auslöseschulter 58 kann mit einer Auflaufschräge 64 an ihrer der Rastmulde 52 zugewandten Fläche versehen sein. Die Auflaufschräge 64 der Auslöseschulter 58 und die Auflaufschräge 30 des Rastvorsprunges sind zueinander so geneigt, dass eine parallel zur Einführrichtung 18 wirkende Kraft außerhalb des Reibungskegels dieser Flächen- /Materialpaarung liegt. So kann bei einem Verschieben der Auslöseschulter 58 in Richtung auf den Rastvorsprung 20 zu keine Selbsthemmung aufgrund der Reibungskräfte auftreten und Rastvorsprung 20 und Auslöseschulter 58 können aneinander vorbeigleiten. Diese Gleitbewegung ist aufgrund der Auflaufschräge 30, 64 mit einer Auslenkung des Rastvorsprungs quer zur Einführrichtung 18, in radialer Richtung 61, hin zur ersten Komponente 2 verbunden, bis der Rastvorsprung 20 auf einer Auflagefläche 66 der Auslöseschulter 58 aufliegt. Dann befindet sich eine Umfangsfläche 68 der Rastschulter 54 aufgrund der in etwa gleichen Höhen 60, 62 in einer Position, in der sie entgegen der Einführrichtung 18 über die Rastschulter 54 geschoben werden kann. Durch Verschieben der Auslöseschulter 58 in die Rastmulde 52 lässt sich folglich die Verrastung der Rastanordnung 1 aufheben.

Es ist nicht zwingend erforderlich, dass sowohl der Rastvorsprung 20 als auch die Auslöseschulter 58 mit jeweils einer Auflaufschräge 30, 64 versehen sind. Es reicht auch aus, wenn nur eine Auflaufschräge 30 oder 64 vorgesehen ist, solange diese dann schräg genug ist, um eine Selbsthemmung zu vermeiden.

Zweckmäßigerweise ist die Freigabe der Verrastung durch die verschiebliche Auslöseschulter 58 mit einem gleichzeitigen Ausschieben der ersten Komponente 2 aus der Aufnahme 50 gekoppelt. Hierzu ist die Auslöseschulter 58 mit einer Ausschiebefläche 70 bewegungsübertragend, vorzugsweise bewegungsstarr, gekoppelt. Eine Bewegung der Auslöseschulter 58 führt somit zu einer gleichgerichteten Bewegung der Ausschiebefläche 70 und umgekehrt. Die Ausschiebefläche 70 überlappt sich in Einführrichtung 18 mit einer Endfläche 72 des Endes 32 der ersten Komponente. Wird die Auslöseschulter 58 axial in die Rastmulde 52 bewegt, wird der Rastvorsprung 20 durch die Auflaufschräge 64 radial eingedrückt und dann auf der Höhe 60 gehalten, bis die Ausschiebefläche 70 an die Endfläche 72 stößt. Bei einem weiteren Einschieben der Auslöseschulter 58 in die Rastmulde 52 drückt die Ausschiebefläche 70 dann die erste Komponente 2 aus der Aufnahme 50.

Konstruktiv einfach lassen sich Auslöseschulter 58 und Ausschiebefläche 70 in einer Kappe 74 integrieren. Die Auslöseschulter 58 ist dabei Teil eines Kragens 76, der die Ausschiebefläche 70 umgibt und das freie Ende 32 bei verrasteter ersten Komponente 2 aufnimmt. Die Ausschiebefläche 70 ist von einem Kappenboden 78 gebildet, der die Aufnahme 50 zweckmäßigerweise verschließt und die Rastanordnung so gegen das Eindringen von Schmutz sichert. Die Kappe 74 kann durch ein Haltemittel 79, beispielsweise einen Sprengring, in die Aufnahme 50 gegen Herausfallen gesichert sein.

Damit die Auslöseschulter 58 bewegt werden kann, ist sie mit einem von außerhalb der Rastanordnung 1 bzw. erster und/oder zweiter Komponente 2, 4 zugänglichen Handschalter 80 bewegungsstarr verbunden. Bei der Ausgestaltung der Fig. 1 ist der Handschalter 80 durch den Kappenboden 78 gebildet. Der Benutzer muss zum Freigeben der Verrastung von erster Komponente 2 und zweiter Komponente 4 also lediglich den Kappenboden 78 drücken, wobei dann die Auslöseschulter 58 in die Rastmulde 52 und gleichzeitig die zweite Komponente 4 aus der Aufnahme 50 geschoben werden. Ein Herausfallen der ersten Komponente 2 wird durch das Formgehemme mit der Haltemulde 40 und der Feder 42 verhindert.

Der Handschalter 80 ist bevorzugt eine plane oder allenfalls leicht gewölbte Fläche, deren Durchmesser wenigstens Daumendurchmesser, also wenigstens 15 mm beträgt.

Auf der von der Kappe 74 abgewandten Seite ist die Aufnahme 50 durch den Bereich 38 der ersten Komponente 2 verschlossen, deren vorderer Bereich sich gegen die Rastschulter 54 anlegt.

Die Aufnahme 50 kann ganz oder wenigstens teilweise durch ein separates, hülsenförmiges Anschlussteil 82 ausgebildet sein. Das Anschlussteil 82 wird beispielsweise am Grundkörper der zweiten Komponente 4 an der in Einführrichtung 18 gelegenen Seite des Durchlasses 16 angebracht. Die Rastschulter 54 kann dabei noch Teil der zweiten Komponente 4 sein.

Fig. 2 zeigt die Rastanordnung 1 im verrasteten Zustand. Der Rastvorsprung 20 ist in der Rastmulde 52 eingerastet. Die auf den Rastvorsprung 20 wirkende Federkraft drückt über die wenigstens eine Auflaufschräge 30, 64 die Auslöseschulter 58 in Einführrichtung 18 aus der Rastmulde 52. Der Abstand 84 zwischen der Ausschiebefläche 70 und der Endfläche 72 der ersten Komponente 2 vorzugsweise in Richtung der Verschieblichkeit der Auslöseschulter 58, also bei dem dargestellten Ausführungsbeispiel parallel zur Einführrichtung, ist kleiner als eine Länge 86 des Auslösewegs der Auslöseschulter 58, den die Auslöseschulter 58 von dem in Fig. 2 dargestellten verrasteten Stellung in ihre Endstellung überstreicht. In der Endstellung schlägt die Auslöseschulter 58 oder die Kappe 74 gegen einen Anschlag 88, der beispielsweise von der Rastfläche 56 der Rastschulter 54 gebildet ist. Auf diese Weise ist sichergestellt, dass die Ausschiebefläche 70 die erste Komponente 2 aus der Aufnahme 50 schieben kann.

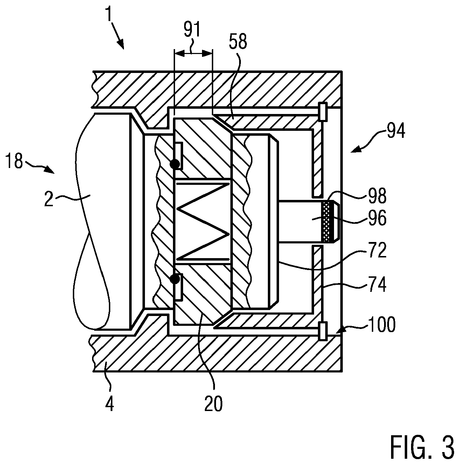

Bevor die Ausschiebefläche 70 gegen die Endfläche 72 schlägt, also in einer Position zwischen der in Fig. 1 dargestellten Raststellung und der Endstellung der Auslöseschulter 58 befindet sich eine Auslösestellung, in der der Rastvorsprung 20 durch die Auslöseschulter 58 gegen die Federwirkung soweit eingedrückt ist, dass er an der Rastschulter 54 vorbeigeschoben werden kann. Auf einfache Weise kann dies erreicht werden, wenn in der Raststellung der Rastvorsprung 20 unter Federspannung an der Auslöseschulter 58 anliegt und die Länge 90 der Auslöseschulter 58 parallel zur Einführrichtung kleiner ist als der Abstand 84. Damit der Rastvorsprung 20 durch die Auslöseschulter 58 sicher angehoben ist, ist seine Länge 91 in Einführrichtung ohne Berücksichtigung der Auflaufschräge 30 (Fig. 3) größer als die Länge 90.

Wie in Fig. 2 noch zu erkennen ist, kann in Einführrichtung 18 vor der Auslöseschulter 58 eine Ringnut 92 an der zweiten Komponente 2 angeordnet sein. Die Ringnut 92 kann einen umlaufenden Rastvorsprung 40 an einer Schulter des ersten Bauteils 1, vor dem Übergang zum Ende 32, im Bereich 38, aufnehmen. Dies sichert die erste Komponente 2 zusätzlich in der zweiten Komponente 4, wenn die Verrastung gelöst ist.

Die dargestellte Rastanordnung kann weiter variiert werden. So können mehr oder weniger Rastvorsprünge 20 vorgesehen sein. Die Verrastung kann sich ferner an dem ersten in Einführrichtung 18 gelegenen Durchlass 14 befinden, wenn die Rastvorsprünge an der entsprechenden Position nahe dem Kopf der ersten Komponente 2 angeordnet sind. Allerdings lässt sich bei einer solchen Variante der automatische Auswurf beim Auslösen der Verrastung weniger leicht bewerkstelligen als bei der in den Fig. 1 und 2 dargestellten Variante, da anstelle eines kappenförmigen Handschalters 80 nunmehr ein ringförmiger Handschalter verwendet werden muss.

Schließlich ist es, wie Fig. 3 zeigt, noch möglich, dass die Rastanordnung 1 mit einer Indikatoreinrichtung 94 versehen ist, die von außerhalb der Rastanordnung 1 und der Komponenten 2, 4 optisch erkennbar das Erreichen einer vollständigen Verrastung der Rastanordnung 1 anzeigt. In einer einfachen Ausgestaltung kann die Indikatoreinrichtung 94 einen Zapfen 96 umfassen, der mit der ersten Komponente zumindest bewegungsübertragend, bevorzugt jedoch monolithisch gekoppelt ist. Die Indikatoreinrichtung 94 kann mit wenigstens einer Markierung 98 versehen sein, die von außen nur dann sichtbar ist, wenn die Rastung zwischen erster Komponente 2 und zweiter Komponente 4 vollständig erfolgt ist. Die Markierung 98 kann ein farbiger, beispielsweise grüner, Ring an einem Ende des Zapfens 96 sein.

In Fig. 1 und 2 ist eine weitere Form einer Indikatoreinrichtung 94 mit einer Markierung 98 gezeigt, die nur sichtbar ist, wenn die erste Komponente 2 und die zweite Komponente 4 nicht verrastet sind. Wenigstens eine Markierung 98 befindet sich an einer Stelle der ersten Komponente 2, die bei vollständiger Verrastung der beiden Komponenten 2, 4 von der zweiten Komponente 4 abgedeckt ist, beispielsweise weil sie sich dann in einem Durchlass 14, 16 befindet. Die Markierung 98 kann beispielsweise ein farbiger Ring am Übergang zum Kopf 48 der ersten Komponente 4 sein.

In einer weiteren Variante kann die Indikatoreinrichtung 94 auch mit wenigstens zwei Markierungen 98 versehen sein, von denen wenigstens eine nur dann sichtbar ist, wenn die erste und die zweite Komponente miteinander verrastet sind, und wenigstens eine andere nur dann sichtbar ist, wenn die Verrastung noch nicht vollzogen ist.

Diese Ausgestaltung kann insbesondere mit einer federgespannten Auslöseschulter 58 kombiniert werden, bei der zwischen der Auslöseschulter 58 und der zweiten Komponente 4 die Zusatzfeder angeordnet ist (Fig. 1 und 2). Bevorzugt drückt die Zusatzfeder die Auslöseschulter 58 in die Raststellung, so dass die Markierung 98 tatsächlich nur dann zu sehen ist, wenn die Rastanordnung 1 ordnungsgemäß verrastet ist.

In Fig. 3 ist, wie im übrigen auch in Fig. 2 noch zu erkennen, dass die den Handschalter 80 bildende Kappe 74 außen von einem Kragen 100 als Schutz umgeben sein kann.

### BEZUGSZEICHEN

- 1:: Rastanordnung
- 2:: erste Komponente
- 4:: zweite Komponente
- 6:: Bauteil der Anschlag-, Zurr- oder Hebetechnik
- 8:: Öffnung
- 10:: Schenkel
- 12:: Schenkel
- 14:: Durchlass in einem Schenkel
- 16:: Durchlass in einem Schenkel
- 18:: Einführrichtung
- 20:: Rastvorsprung
- 21:: Ausnehmung in Rastvorsprung
- 21':: Sicherungselement
- 22:: Umfang der ersten Komponente
- 24:: Feder
- 26:: Zapfenfläche
- 28:: über die Zapfenfläche hinausragender Bereich des Rastvorsprungs
- 30:: Auflaufschräge des Rastvorsprungs
- 32:: in Einführrichtung gelegenes Ende der ersten Komponente
- 34:: Durchmesser
- 36:: Durchmesser
- 38:: in Einführrichtung vor der Zapfenfläche gelegener Bereich der ersten Komponente
- 40:: Haltemulden oder -vorsprünge
- 42:: Haltefeder
- 44:: Umfangsrichtung
- 46:: anderes Ende der ersten Komponente
- 48:: Kopf der ersten Komponente
- 50:: Aufnahme
- 52:: Rastmulde
- 54:: Rastschulter
- 56:: Rastfläche der Rastschulter
- 58:: Auslöseschulter
- 59:: Zusatzfeder
- 60:: Höhe der Auslöseschulter
- 61:: radiale Richtung
- 62:: Höhe der Rastschulter
- 64:: Auflaufschräge
- 66:: Auflagefläche
- 68:: Umfangsfläche der Rastschulter
- 70:: Ausschiebefläche
- 72:: Endfläche der ersten Komponente
- 74:: Kappe
- 76:: Kragen
- 78:: Kappenboden
- 79:: Haltemittel
- 80:: Handschalter
- 82:: separates Anschlussteil
- 84:: Abstand zwischen Ausschiebefläche und Endfläche
- 86:: Länge des Auslösewegs
- 88:: Anschlag
- 90:: Länge der Auflaufschräge der Auslöseschulter in Einführrichtung
- 91;: Länge des Rastvorsprungs in Einführrichtung
- 92:: Ringnut
- 94:: Indikatoreinrichtung
- 96:: Zapfen
- 98:: Markierung
- 100:: Kragen

## Patentansprüche

1. Rastanordnung (1) für ein Bauteil (6) der Hebe-, Zurr- oder Anschlagtechnik, mit einer ersten Komponente (2), die an ihrem einen Ende (32) mit wenigstens einem seitlich vorragenden, federgespannten Rastvorsprung (20) versehen ist, und mit einer zweiten Komponente (4), die mit einer Aufnahme (50) versehen ist, in der das Ende (32) der ersten Komponente (2) in einer Einführrichtung (18) aufnehmbar und drehbar befestigbar ist und die eine Rastmulde (52) für den Rastvorsprung (20) aufweist, wobei die Rastmulde (52) an wenigstens einer Seite von einer in die Rastmulde (52) verschieblichen Auslöseschulter (58) begrenzt ist, die mit einem von außerhalb der Rastanordnung (1) zugängig angeordneten, beweglichen Handschalter (80) versehen ist, der mit der Auslöseschulter (58) bewegungsübertragend verbunden ist, **dadurch gekennzeichnet, dass** der Handschalter (80) die Aufnahme (50) verschließt.

2. Rastanordnung (1) nach Anspruch 1, wobei eine Höhe (60) der Auslöseschulter (58) wenigstens einer Höhe (62) einer der Auslöseschulter entgegen der Einführrichtung (18) gegenüberliegenden Rastschulter (54) entspricht.

3. Rastanordnung (1) nach Anspruch 1 oder 2, wobei die Auslöseschulter (58) mit einer zum Rastvorsprung (20) weisenden und/oder der Rastvorsprung (20) mit einer zur Auslöseschulter (58) weisenden Auflaufschräge (30, 64) versehen ist, wobei vorzugsweise ein Winkel der Auflaufschräge (30, 64) relativ zur Richtung (18), in der die Auslöseschulter (58) verschieblich ist, außerhalb des Reibungskegels auf die der Auflaufschräge (30, 64) zugeordnete Gegenfläche (64, 30) von Auslöseschulter (58) und/oder Rastvorsprung (20) liegt.

4. Rastanordnung (1) nach einem der Ansprüche 1 bis 3, wobei bei sich in der Rastmulde (52) befindlichem Rastvorsprung (20) die Auslöseschulter (58) durch den Rastvorsprung (20) aus der Rastmulde (52) gedrückt ist.

5. Rastanordnung (1) nach einem der Ansprüche 1 bis 4, wobei die Rastmulde (52) ringförmig ist.

6. Rastanordnung (1) nach einem der Ansprüche 1 bis 5, wobei die Auslöseschulter (58) ringförmig ist.

7. Rastanordnung (1) nach einem der Ansprüche 1 bis 6, wobei die Auslöseschulter (58) bis zum Anschlag an eine in entgegen der Einführrichtung (18) gegenüberliegende Rastschulter (54) in die Rastmulde (52) verschieblich ist.

8. Rastanordnung (1) nach einem der Ansprüche 1 bis 7, wobei der Handschalter (80) kappenförmig ausgestaltet ist.

9. Rastanordnung (1) nach Anspruch 8, wobei die Auslöseschulter von einem Kragen (76) der den Handschalter (80) bildenden Kappe (74) gebildet ist.

10. Rastanordnung (1) nach Anspruch 8 oder 9, wobei die Kappe (74) in der Aufnahme (50) verschieblich gehalten ist.

11. Rastanordnung (1) nach einem der Ansprüche 8 bis 10, wobei im verrasteten Zustand von erster und zweiter Komponente (2, 4) das Ende (32) der ersten Komponente (2) zumindest abschnittsweise in der Kappe (74) aufgenommen ist.

12. Rastanordnung (1) nach einem der Ansprüche 1 bis 11, wobei mit der Auslöseschulter (58) eine die erste Komponente (2) in Einführrichtung (18) überlappende, entgegen der Einführrichtung (18) verschiebliche Ausschiebefläche (70) verbunden ist, wobei der Abstand (84) der Ausschiebefläche (70) von der ersten Komponente (2) kleiner ist als die Länge (90) des Auslöseweges, den die Auslöseschulter (58) bei der Bewegung von einer Raststellung, in der sich die Auslöseschulter (58) bei in der Rastmulde (52) verrasteten Rastvorsprung (20) befindet, und einer Endstellung in der Rastmulde (52) überstreicht.

13. Rastanordnung (1) nach einem der Ansprüche 1 bis 12, wobei eine Indikatoreinrichtung (94) mit wenigstens einer Markierung (98) an der ersten Komponente (2) vorgesehen ist und die Markierung (98) entweder nur bei verrastetem Rastvorsprung (20) oder nur bei nicht verrastetem Rastvorsprung (20) von außen sichtbar angeordnet ist.

14. Rastanordnung 1 nach einem der Ansprüche 1 bis 13, **dadurch gekennzeichnet, dass** der Rastvorsprung (20) zumindest in Einführrichtung (18) der ersten Komponente (2) im Schatten der zweiten Komponente (4) liegt.

15. Bauteil (6) der Anschlag-, Hebe- oder Zurrtechnik, mit einer Rastanordnung (1) nach einem der Ansprüche 1 bis 14, wobei die erste Komponente (2) ein Bolzen ist, der eine Öffnung (8) der zweiten Komponente (4) verschließt, wobei die zweite Komponente (2) vorzugsweise bügelförmig ist.

## Claims

1. Latching arrangement (1) for a component (6) from lifting, lashing or fastening technology, having a first component (2) provided at its one end (32) with at least one laterally protruding, spring-tensioned latching projection (20), and having a second component (4) provided with a receptacle (50) configured to receive in an insertion direction (18) and to fasten rotatably the end (32) of the first component (2), and which second component (4) comprises a latching recess (52) for the latching projection (20), wherein the latching recess (52) is bounded at least at one side by a release shoulder (58) displaceable into the latching recess (52) which is provided with a movable hand switch (80) arranged so as to be accessible from outside the latching arrangement (1), which hand switch (80) is connected in a movement-transmitting manner to the release shoulder (58), **characterized in that** the hand switch (80) closes the receptacle (50).

2. Latching arrangement (1) according to claim 1, wherein a height (60) of the release shoulder (58) corresponds at least to a height (62) of a latching shoulder (54) opposite the release shoulder against the insertion direction (18).

3. Latching arrangement (1) according to claim 1 or 2, wherein the release shoulder (58) is provided with a guide bevel (30, 64) facing the latching projection (20), and/or the latching projection (20) is provided with a guide bevel (30, 64) facing the release shoulder (58), wherein preferably an angle of the guide bevel (30, 64) is, relative to the direction (18) in which the release shoulder (58) is displaceable, outside the cone of friction onto the opposite surface (64, 30) of the release shoulder (58) and/or the latching projection (20) associated to the guide bevel (30, 64).

4. Latching arrangement (1) according to one of claims 1 to 3, wherein the release shoulder (58) is, when the latching projection (20) is located in the latching recess (52), pushed out of the latching recess (52) by the latching projection (20).

5. Latching arrangement (1) according to one of claims 1 to 4, wherein the latching recess (52) is annular.

6. Latching arrangement (1) according to one of claims 1 to 5, wherein the release shoulder (58) is annular.

7. Latching arrangement (1) according to one of claims 1 to 6, wherein the release shoulder (58) is displaceable into the latching recess (52) up to a stop collar to an opposite latching shoulder (54) opposite to the insertion direction (18).

8. Latching arrangement (1) according to one of claims 1 to 7, wherein the hand switch (80) is embodied like a cap.

9. Latching arrangement (1) according to claim 8, wherein the release shoulder is formed by a collar (76) of the cap (74) forming the hand switch (80).

10. Latching arrangement (1) according to claim 8 or 9, wherein the cap (74) is displaceably held in the receptacle (50).

11. Latching arrangement (1) according to one of claims 8 to 10, wherein in the latched state of the first and second components (2, 4), the end (32) of the first component (2) is received in the cap (74) at least in sections.

12. Latching arrangement (1) according to one of claims 1 to 11, wherein a pushing-out surface (70) displaceable opposite to the insertion direction (18) and overlapping the first component (2) in the insertion direction (18) is connected to the release shoulder (58), wherein the distance (84) of the pushing-out surface (70) to the first component (2) is smaller than the length (90) of the release path the release shoulder (58) passes over during the movement from a latching position which the release shoulder (58) assumes with the latching projection (20) latched in the latching recess (52), and an end position in the latching recess (52).

13. Latching arrangement (1) according to one of claims 1 to 12, wherein an indicator device (94) with at least one mark (98) is provided at the first component (2), and the mark (98) is arranged so as to be visible from outside either only when the latching projection (20) is latched or only when the latching projection (20) is not latched.

14. Latching arrangement (1) according to one of claims 1 to 13, **characterized in that** the latching projection (20) is lying in the shadow of the second component (4) at least in the insertion direction (18) of the first component (2).

15. Component (6) from fastening, lifting, or lashing technology, having a latching arrangement (1) according to one of claims 1 to 14, wherein the first component (2) is a bolt closing an opening (8) of the second component (4), wherein the second component (2) preferably is bow-shaped.

## Revendications

1. Ensemble d'encliquetage (1) pour un élément (6) dans le domaine du levage, de l'arrimage ou de l'accrochage, avec un premier élément (2) qui est pourvu à l'une de ses extrémités (32) d'au moins une saillie d'encliquetage (20) en saillie latérale et montée sur, et avec un second élément (4) qui est pourvu d'un logement (50) dans lequel l'extrémité (32) du premier élément (2) peut être reçue et fixée de manière rotative dans un sens d'insertion (18) et qui présente un creux d'encliquetage (52) pour la saillie d'encliquetage (20), le creux d'encliquetage (52) étant délimitée au moins d'un côté par un épaulement de libération (58) qui peut être déplacé dans le creux d'encliquetage (52) et qui est pourvu d'un commutateur manuel mobile (80) qui est disposé de manière à être accessible de l'extérieur du ensemble d'encliquetage (1) et qui est relié à l'épaulement de libération (58) de manière à transmettre le mouvement, **caractérisé en ce que** le commutateur manuel (80) ferme le réceptacle (50).

2. Ensemble d'encliquetage (1) selon la revendication 1, dans lequel une hauteur (60) de l'épaulement de libération (58) correspond à au moins une hauteur (62) d'un épaulement d'encliquetage (54) opposé à l'épaulement de libération à l'encontre de la direction d'insertion (18).

3. Ensemble d'encliquetage (1) selon les revendications 1 ou 2, dans lequel l'épaulement de libération (58) est pourvu d'un chanfrein d'entrée (30, 64) dirigé vers la saillie d'encliquetage (20) et/ou la saillie d'encliquetage (20) est pourvue d'un chanfrein d'entrée (30, 64) dirigé vers l'épaulement de libération (58), dans lequel de préférence un angle du chanfrein d'entrée (30), 64) par rapport à la direction (18) dans laquelle l'épaulement de libération (58) est déplaçable, se trouve à l'extérieur du cône de friction sur la contre-surface (64, 30) de l'épaulement de libération (58) et/ou de la saillie d'encliquetage (20) associée à la pente d'accélération (30, 64).

4. Ensemble d'encliquetage (1) selon l'une des revendications 1 à 3, dans lequel, lorsque la saillie d'encliquetage (20) se trouve dans le creux d'encliquetage (52), l'épaulement de libération (58) est poussé hors du creux d'encliquetage (52) par la saillie d'encliquetage (20).

5. Ensemble d'encliquetage (1) selon l'une des revendications 1 à 4, dans lequel le creux d'encliquetage (52) est annulaire.

6. Ensemble d'encliquetage (1) selon l'une des revendications 1 à 5, dans lequel l'épaulement de libération (58) est annulaire.

7. Ensemble d'encliquetage (1) selon l'une des revendications 1 à 6, dans lequel l'épaulement de libération (58) peut être déplacé dans le creux d'encliquetage (52) jusqu'en butée contre un épaulement d'encliquetage (54) situé à l'opposé du sens d'insertion (18).

8. Ensemble d'encliquetage (1) selon l'une des revendications 1 à 7, dans lequel l'interrupteur manuel (80) est conçu comme un capuchon.

9. Ensemble d'encliquetage (1) selon la revendication 8, dans lequel l'épaulement de libération est formé par un collier (76) du capuchon (74) formant l'interrupteur manuel (80).

10. Ensemble d'encliquetage (1) selon les revendications 8 ou 9, dans lequel le capuchon (74) est maintenu de manière coulissante dans le réceptacle (50).

11. Ensemble d'encliquetage (1) selon l'une des revendications 8 à 10, dans lequel, à l'état verrouillé des premier et second composants (2, 4), l'extrémité (32) du premier composant (2) est reçue au moins par sections dans le capuchon (74).

12. Ensemble d'encliquetage (1) selon l'une des revendications 1 à 11, dans lequel une surface d'extension (70) chevauchantle premier composant (2) dans le sens d'insertion (18) et pouvant être déplacée dans le sens inverse est reliée à l'épaulement de libération (58), dans lequel la distance (84) de la surface de poussée (70) par rapport au premier composant (2) est inférieure à la longueur (90) de la trajectoire de libération que l'épaulement de libération (58) parcourt pendant le mouvement entre une position d'encliquetage, dans laquelle l'épaulement de libération (58) se trouve lorsque la saillie d'encliquetage (20) est verrouillée dans le creux d'encliquetage (52), et une position finale dans le creux d'encliquetage (52).

13. Ensemble d'encliquetage (1) selon l'une des revendications 1 à 12, dans lequel un dispositif indicateur (94) avec au moins un marquage (98) est prévu sur le premier composant (2) et le marquage (98) est disposé de manière à être visible de l'extérieur soit uniquement lorsque la saillie d'encliquetage (20) est verrouillée, soit uniquement lorsque la saillie d'encliquetage (20) n'est pas verrouillée.

14. Ensemble d'encliquetage (1) selon l'une des revendications 1 à 13, **caractérisé en ce que** la saillie d'encliquetage (20) se trouve dans l'ombre du second élément (4) au moins dans la direction d'insertion (18) du premier élément (2).

15. Elément (6) dans le domaine du levage, de l'arrimage ou de l'accrochage, comportant un ensemble d'encliquetage (1) selon l'une des revendications 1 à 14, le premier élément (2) étant un verrou qui ferme une ouverture (8) du second élément (4), le second élément (2) étant de préférence en forme d'arc.
